Europäisches Patentamt

**European Patent Office**

**Office européen des brevets**

(11) Publication number: **0 390 296**
**A1**

# EUROPEAN PATENT APPLICATION

(21) Application number: **90200790.5**

(22) Date of filing: **02.04.90**

(51) Int. Cl.⁵: **B64F 5/00**

(30) Priority: **31.03.89 NL 8900803**

(43) Date of publication of application:
**03.10.90 Bulletin 90/40**

(84) Designated Contracting States:
**BE CH DE DK ES FR GB IT LI NL**

(71) Applicant: **PRAKSIS B.V.**
**Kanaalstraat 244-246**
**NL-1970 AD IJmuiden(NL)**

(72) Inventor: **Prins,Willem Frederik**
**Wilhelminaweg 35**
**2042 NN Zandvoort aan Zee(NL)**

(74) Representative: **Boelsma, Gerben Harm, Ir. et al**
**Octrooibureau Polak & Charlouis Laan**
**Copes van Cattenburch 80**
**NL-2585 GD Den Haag(NL)**

(54) A device for carrying out cleaning and similar maintenance treatments with aircrafts.

㊉ A device for carrying out external cleaning and similar maintenance treatments with aircrafts, comprising two portal structures which are positioned on guideways on an aircraft parking place and are adapted to move towards and away from each other such that they may, from a maximum spaced position, be moved towards each other across the wings of a parked aircraft until a position adjacent the body. At least one cleaning unit is movably mounted on the horizontal beam section of each portal structure, said unit comprising a carriage which is movable in the longitudinal direction of the beam section and has a vertically movable supporting pillar, to which the proper cleaning tools are fastened by means of pivoting supporting arms. According to the invention the cleaning tool, more particularly a roller brush, is mounted in such a way that the angular position of the pivot or rotational axis of the same way selectively vary between perpendicular to and parallel to the longitudinal axis of the aircraft.

FIG. 3

EP 0 390 296 A1

# A device for carrying out cleaning and similar maintenance treatments with aircrafts

The invention relates to a device for carrying out external cleaning and similar maintenance treatments with aircrafts, comprising two portal structures which are positioned on guideways on an aircraft parking place and are adapted to move towards and away from each other such that they may, from a maximum spaced position, be moved towards each other across the wings of a parked aircraft until a position adjacent the body, at least one cleaning unit being movably mounted on the horizontal beam section of each portal structure, said unit comprising a carriage which is movable in the longitudinal direction of the beam section and has a vertically movable supporting pillar, to which the proper cleaning tools are fastened by means of pivoting supporting arms. Such a device is known from US-A-4.614.002.

With this well-known device the construction of the cleaning units which are displaceable along each of the beam sections and consist of a carriage, a supporting pillar, a supporting arm and the cleaning tools (a cleaning brush), is such, that the axes of rotation of the cleaning brushes are always directed perpendicular to the longitudinal axis of the aircraft. Due to this the cleaning can be effected only in the longitudinal direction. Moreover different cleaning tools are required for the upper surface, the lower surface and the lateral surfaces of the body, as well as for the tail wings and the main wings.

The device proposed by this invention distinguishes from the well-known device above referred to by such a mounting of the cleaning tools, that the angular position of the pivot or rotational axis of the same may selectively vary between perpendicular to and parallel to the longitudinal axis of the aircraft.

As a result of the measure according to the invention e.g. the body of the aircraft may be cleaned selectively in longitudinal ribbon-shaped tracks or in "slices" perpendicular to the longitudinal axis of the aircraft. When e.g. the main wings have to be cleaned the rotational axis of the cleaning brush may be positioned in the horizontal plane at a certain angle relative to the longitudinal axis of the aircraft, such that this rotational axis will be positioned substantially transversal to the axis of the wing, so that the cleaning of the wing can be effected by moving the respective portal structure inwards or outwards, the carriage being simultaneously displaced along the beam section of said portal structure.

The measure according to the present invention also has the advantage, that the cleaning tools have become more universal in use so that they may be equally and thus interchangeably formed. In a practical embodiment the proper cleaning tool, more particular a rolling brush, is fastened to its supporting arm with the position of its rotational axis being adjustable between a horizontal and a vertical position, while the supporting pillar is swingably mounted to the carriage about a vertical axis. The supporting arm may have an adjustable length and be vertically movably fastened to the supporting pillar.

Preferably the beams of the portals extend a certain distance beyond the portal-uprights. In this way the portal beams may cover the entire body length of the aircraft to be cleaned.

The invention will be hereinafter further explained by way of example with reference to the accompanying drawing.

Figs. 1-3 show the device of the invention together with an aircraft to be cleaned, in plan view, front elevation and side elevation respectively and

fig. 4 is a perspective view on an enlarged scale of a portion of a portal.

The device shown comprises two portals 1, supported on wheels 2 and positioned one parallel to the other, each portal comprises a horizontal beam 4 and two uprights 5. The ends of the beams 4 extend a certain distance beyond the respective uprights 5.

Rails 3 are provided on an area of an air field that is intended for parking aircrafts to be cleaned. The drawing shows such an aircraft 6 which has been manoeuvred - e.g. with the aid of signs on the ground, such as track lines - in the right position for a cleaning up treatment. The rails 3 extend in a direction perpendicular to the longitudinal axis of the parked aircraft.

The two portals 1 may be moved apart on said rails 3 to such an extent that the aircraft may pass with its wings between the opposite uprights of the two portals. Once the aircraft has been manoeuvred in place, the portals 1 may be moved together, with the beams 4 moving over the wings until the position, indicated with full lines in the drawings, is reached, in which the beams 4 extend at a short distance on either side of the body of the aircraft. In the event the aircraft appears not to be correctly aligned relative to the portal beams, this may be simply rectified by causing the portals to take a position which is slightly obliquely to the rails direction. The structure permits such a rectification.

As shown in the drawing, the uprights 5 have an inwardly extending base portion 5a which carries the wheels 2, while the upper portion 5b of each upright also projects inwardly to a certain extent.

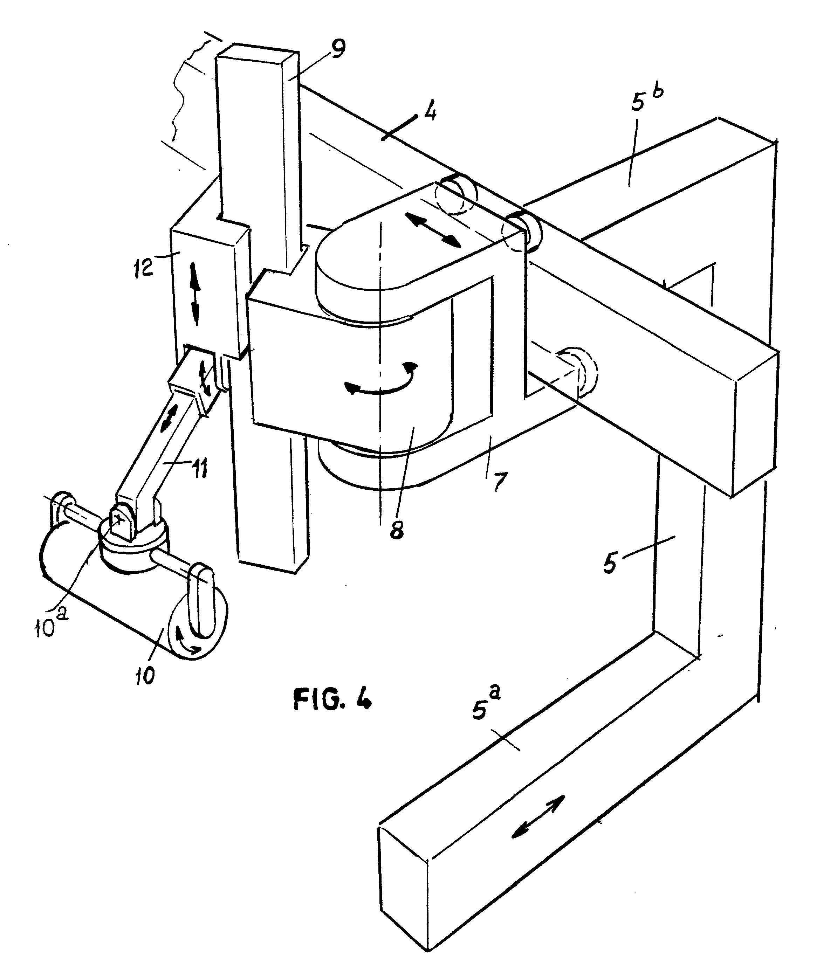

A number of carriages 7 is supported on each of the beams 4 for movement in the longitudinal direction. The carriages 7 are provided with a guide block 8 swingably mounted about a vertical axis, for a vertically adjustable rod 9, to which the proper cleaning device in the form of a (brush) nozzle 10 is fastened by means of a supporting arm 11. The supporting arms 11 are telescopingly extendable and retractable and are pivotally connected to the guide plate 12 mounted for vertical movement along the rod 9 (vide fig. 4). The nozzle body or roller brush body 10 respectively is pivotally connected, about axis 10a, to the arm 11 so that its rotational axis may vary between a horizontal and a vertical position.

It will be clear, that in the position indicated with full lines in the drawing, the body of the aircraft may be cleaned up in a quick and effective manner, e.g. in successive ribbon-shaped longitudinal zones, by causing the carriages 7 to reciprocate along the beams 4 and causing the cleaning tools each time to move on longitudinal zone in circumferential direction. More than one longitudinal ribbon-shaped zones of the body may be simultaneously cleaned by means of a plurality of tools, which take different circumferential positions.

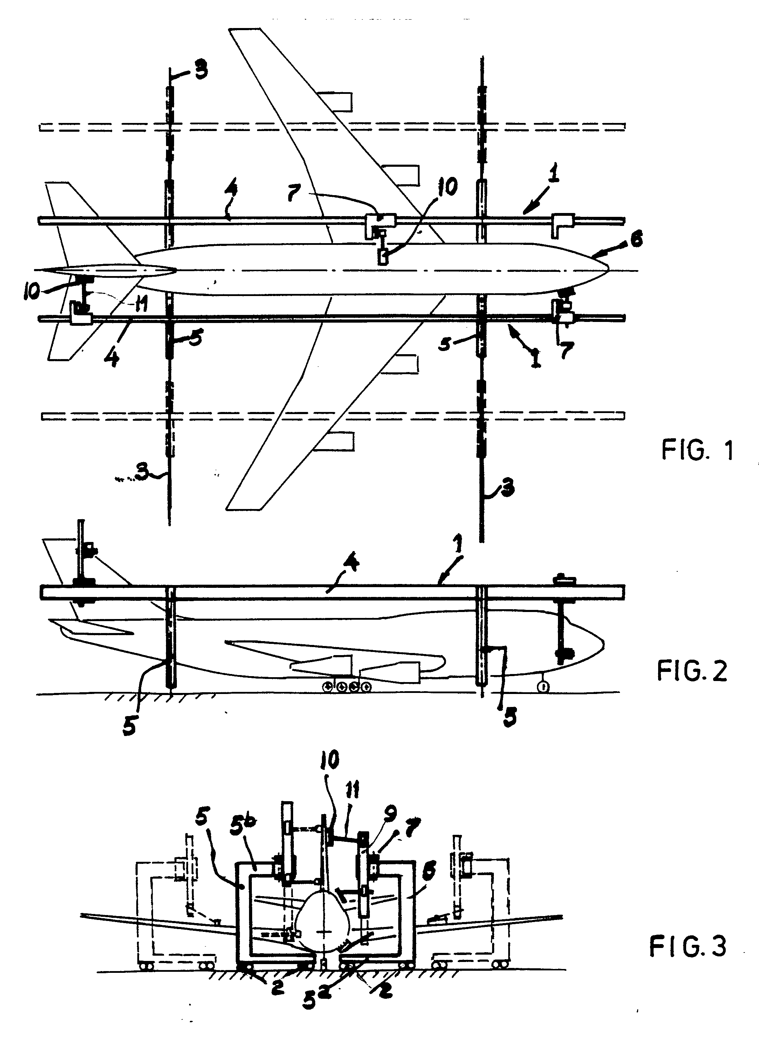

It is illustrated in fig. 3 that all portions of the body may be reached by a suitable height-adjustment of the rods 9 and by a suitable height and angular position of the supporting arm 11 relative to the rod 9, while adjusting the correct effective length of the supporting arms 11. The rotational and pivotal axes of the proper cleaning tools may be selectively positioned perpendicular or parallel to the longitudinal axis of the aircraft in order to treat the surface to be cleaned either in longitudinal bands or in vertical slices (to the left in fig. 3).

In this same position, e.g. with the portals 1 being stationary, the (horizontal) tail surfaces and the stabilo may be cleaned as well. The wings of the aircraft may be treated by the same tools, whereby the portals, are, e.g. stepwise, moved along the rails from the inside to the outside or vice versa, while displacing the carriages 7 at a suitable speed on the beam portion 4 of the respective portal 1.

In the drawing an intermediary position of the two portals is indicated by dash lines, illustrating the cleaning tools in operation on the upper surface of the wings (vide in particular fig. 2).

It will be understood, that the portals are each provided with means for driving the wheels 2 and for controlling and coordinating the movements of the various parts (carriages 7, supporting rods 8 and supporting arms 10) which determine the position of the cleaning tools 9. Various modifications might be used for these parts.

## Claims

1. A device for carrying out external cleaning and similar maintenance treatments with aircrafts, comprising two portal structures which are positioned on guideways on an aircraft parking place and are adapted to move towards and away from each other such that they may, from a maximum spaced position, be moved towards each other across the wings of a parked aircraft until a position adjacent the body, at least one cleaning unit being movably mounted on the horizontal beam section of each portal structure, said unit comprising a carriage which is movable in the longitudinal direction of the beam section and has a vertically movable supporting pillar, to which the proper cleaning tools are fastened by means of pivoting supporting arms, characterized in that the cleaning tools are mounted such that the angular position of the pivot or rotational axis of the same way selectively vary between perpendicular to and parallel to the longitudinal axis of the aircraft.

2. A device according to claim 1, characterized in that the proper cleaning tools, more particularly roller brushes, are pivotally attached to the respective supporting arms such that the rotational axes of the roller brushes may vary between a horizontal position and a vertical position.

3. A device according to claim 1 and 2, characterized in that the supporting rod is swingably attached to the carriage about a vertical axis.

4. A device according to claims 1-3, characterized in that the supporting arms have an adjustable length and are vertically movably mounted to the supporting rods.

5. A device according to claims 1-4, characterized in that the beam sections of the portals extend, at both ends, a certain distance beyond the portal-uprights.

EP 0 390 296 A1

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 614 002 (HITACHI)<br>* Column 2, lines 9-13,38-49; column 3, lines 3-12; column 4, lines 26-42 * | 1-5 | B 64 F 5/00 |
| A | US-A-4 668 301 (TAKIGAWA)<br>* The whole document * | 1 | |
| A | DE-A-2 444 743 (MESSERSCHMITT-BÖLKOW)<br>* The whole document * | 1 | |

TECHNICAL FIELDS
SEARCHED (Int. Cl.5)

B 64 F

The present search report has been drawn up for all claims

| Place of search | Date of completion of the search | Examiner |
|---|---|---|
| THE HAGUE | 26-06-1990 | HAUGLUSTAINE H.P.M. |

EPO FORM 1503 03.82 (P0401)